# EUROPEAN PATENT SPECIFICATION

(11) **EP 1 844 596 B1**
(45) Date of publication and mention of the grant of the patent: **17.10.2012**
(21) Application number: 06719801.0
(22) Date of filing: 27.01.2006
(51) Int. Cl.: H04L 29/06

(54) **METHOD AND SYSTEM FOR MITIGATING DENIAL OF SERVICE IN A COMMUNICATION NETWORK**
VERFAHREN UND SYSTEM ZUR VERRINGERUNG VON DIENSTVERWEIGERUNG IN EINEM KOMMUNIKATIONSNETZ
PROCEDE ET SYSTEME D'ATTENUATION DE DENIS DE SERVICES DANS UN RESEAU DE COMMUNICATION

(30) Priority: 28.01.2005 US 648262 P
(43) Date of publication of application: 17.10.2007
(73) Proprietor: Broadcom Corporation, Irvine, CA 92618-3616 (US)
(72) Inventor: ZUR, Uri, El, Irvine, CA 92603 (US); MCDANIEL, Scott, Villa Park, CA 92861 (US)
(74) Representative: Jehle, Volker Armin
(86) International application number: PCT/US2006/003107
(87) International publication number: WO 2006/081507

(56) References cited:
- WO-A-02/25402
- US-A1- 2002 032 871
- US-A1- 2004 054 925
- US-B1- 6 738 814

## Description

### FIELD OF THE INVENTION

Certain embodiments of the invention relate to communication networks. More specifically, certain embodiments of the invention relate to a method and system for mitigating denial of service in a communication network.

### BACKGROUND OF THE INVENTION

A service provider, for example, a server, a print server, a file server and/or an email server that possesses finite resources may be subject to attacks such as denial-of-service (DoS). A distributed denial of service (DDoS) is a popular format in which a potentially large number of compromised machines may be utilized to launch an attack on a server. In a DoS attack, an attacker attempts to force a service provider to allocate resources in a wasteful manner such that legitimate clients are denied service. When a machine or device is connected to a network, transport control protocol (TCP) may be utilized to launch DoS attacks. For example, using TCP, an illegitimate client may establish multiple connections with a server or compromise an intermediary device by requesting the intermediary device to demand a connection to the server. By establishing multiple connections, the illegitimate ciient may consume server resources that may otherwise be utilized to service legitimate clients, such as running applications or manage network connections. As a result, new legitimate requests may be denied as the server runs out of available resources.

The typical server resources that are attacked may include central processing unit (CPU) bandwidth or CPU power, memory, disk space, network connections, network bandwidths, and quality of service (QoS). In general, service providers strive to identify attacks before they take a toll and disrupt service to legitimate clients. An example of a mitigation scheme for a denial of service attack using connection setup requests is that in some communication systems, a server may place a connection on a "potential open" list without committing its resources until a client commits its own resources later in the connection open process. The consumption of resources on the client side, in order to launch attacks against the server, may limit the number of attacks it may launch against the server.

Some attacks may create a surge of TCP connection setup requests in order to deplete server resources. Since a server consumes resources whenever a connection is accepted, generating a plurality of TCP connection setup request may rapidly deplete server resources. Although a server may have enough resources to simultaneously support, for example, about 10,000 connections, any connection consumed by an attacker may result in a denial of a legitimate connection request. Furthermore, as the number of requested connections increase, the likelihood of denial of service to a legitimate client also significantly increases. Even if an illegitimate connection is not eventually established, an illegitimate connection request consumes valuable CPU bandwidth and memory resources for processing the request, and this may steal resources, which may be better utilized for servicing legitimate requests.

Another popular mode for launching an attack may involve transmitting Internet control message protocol (ICMP) packets at an excessive rate to a server. This may require the server to respond by, for example, transmitting ICMP echo or ping messages. The ICMP is a layer 3 protocol that is integrated with the transport control protocol/ Internet protocol (TCP/IP) protocol suite. It allows routers to send error and control messages about packet processing on IP networks. For example, if a packet cannot reach its destination, an ICMP message may be sent to the packet's source to inform it that the packet has not reached its destination. The ICMP messages may report congestion when a router's buffer is full and is unable to properly forward packets. A source quench message may be returned to the data source to slow down packet transmission. Troubleshooting information may also be relayed through an ICMP's echo feature. The ping utility is provides the capability to send a packet roundtrip between hosts.

In instances where a significant amount of ICMP messages are sent at a high rate, the server resources may be consumed to process the ICMP requests and to respond to these requests. If enough resources are consumed, this may eventually result in the denial of service to a legitimate client. A server that processes requests from illegitimate clients wastes resources that may otherwise be reserved and/or utilized by legitimate clients. It is critical to stop these attacks before they affect critical server resources and significantly degrade system performance.

An organization may have an internal network protected from the external world by a firewall, for example. An attack from outside an organization may employ more machines with larger number of different IP addresses than an attack using compromised internal machines that may belong to few subnets. A few machines may be compromised by external or internal attackers, for example, by guessing or stealing passwords that may lead to a large scale attack of internal machines. Such an attack may be, in some cases limited to a single or few IP subnets, as many machines may be deployed on the same subnet. The filtering required to identify potential attackers may be simplified, once the source of the attack has been identified as relating to these IP subnets. However, each individual attack may be different. For example, attacks may be from a spoofed source IP address and accordingly, the attack may not be found by searching for that repeated address.

An attack may be repetitive in which the same source may try to launch the same attack. The attack may be prevented in the future by knowing the source and blocking it. Another attack type may be from the same source but may address different services, for example, HTTP port, FTP port. An attack may be launched from different source addresses making the learning process difficult, as the server may not be able to identify the attack by its source address alone. The learning process may include identifying the existence of an attack and then identifying the root cause of its source or mechanism. US673 8814 B1 discloses a method for blocking Denial of service and address spoofing attacks. The incoming data packets from the public network are analyzed and matched with known patterns associated with known forms of attack on the private network. The source of data packet is identified as malicious or non-malicious based upon the matching.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A method and system for mitigating denial of service in a communication network, substantially as shown in and/or described in connection with at least one of the figures, as set forth more completely in the claims.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1A is a block diagram of an exemplary client server architecture that may be utilized in accordance with an embodiment of the invention.

FIG. 1B is a block diagram of exemplary hardware with a network interface controller (NIC) providing L2 services for mitigating denial of service, in accordance with an embodiment of the invention.

FIG. 1C is a block diagram of exemplary hardware with a NIC providing L2 and L4 services using a TCP offload engine (TOE), in accordance with an embodiment of the invention.

FIG. 2 is a block diagram illustrating a classifier block of the network interface controller of FIG. 1B, in accordance with an embodiment of the invention.

FIG. 3A is a block diagram of a L2 NIC with the list stored in an attached or hosi memory, in accordance with an embodiment of the invention.

FIG. 3B is a block diagram of a L4 NIC with the list stored in the context memory system of the TCP offload engine (TOE), in accordance with an embodiment of the invention.

FIG. 3C is a block diagram illustrating storage of illegitimate clients in the classifier block of the network interface card of FIG. 2, in accordance with an embodiment of the invention.

FIG. 4 is a block diagram illustrating storage of a list of legitimate clients in the classifier block of the network interface controller of FIG. 2, in accordance with an embodiment of the invention.

FIG. 5 is a block diagram of a network interface controller (NIC) illustrating storage of a list of legitimate clients and a list of illegitimate clients, in accordance with an embodiment of the invention.

FIG. 6 is a exemplary block diagram illustrating offloading tasks from a host to a NIC, in accordance with an embodiment of the invention.

FIG. 7 is a flowchart illustrating mitigating denial of service in a communication system, in accordance with an embodiment of the invention.

### DETAILED DESCRIPTION OF THE INVENTION

Certain aspects of a method and system for mitigating denial of service may comprise determining whether at least a first connection identifier of a received incoming packet matches at least a second connection identifier stored in memory. A screening mechanism and a rate limiting mechanism may be utilized to regulate the received incoming packet based on determining whether at least the first connection identifier of the received incoming packet matches at least the second connection identifier stored in memory.

A connection Identifier comprising some of the address fields of a particular frame may be used to associate a received frame with a connection for classification and handling. A policy or a history may suggest that frames that belong to a particular connection identifier may be accepted or rejected as a suspected attack. Address fields that are part of a connection identifier may be an Ethernet MAC address, 802.1 fields, Ethernet frame type, layer 3 addresses, for example, IPv4 or IPv6 addresses, layer 4 address, for example, TCP or UDP ports, higher layer headers or fields, for example, network file system (NFS) header or iSCSI protocol data unit (PDU) header fields. The connection identifier may comprise a complete field or portions of any of the above fields or any combination of fields or sub fields or wild cards.

The connection identifier may be a unique string representing the name of the connection. This name may then be used as a placeholder to indicate the connection itself. The connection identifier may be utilized to specify a unidirectional medium access control (MAC) layer address that identifies a connection to equivalent peers in the medium access control layer of the base station and subscriber station. It maps to a service flow identifier (SFID), which defines the QoS parameters of the service flow associated with the particular connection. The connection identifier may comprise a remote IP address, a remote transport port or flow designator, a TCP port, a local IP address and/or a local transport port.

A packet type may be referred to as a class of frames. For example, Internet control message protocol (ICMP) frames, Ethernet multicast or Broadcast frames, an Ethernet frame with a specific frame type value or with a particular virtual local area network (VLAN) ID. The frames that may be rate limited may comprise TCP synchronous (SYN) frames, other transport connection requests, ICMP frames, address resolution protocol (ARP) and reverse address resolution protocol (RARP), one or more of which may be utilized by attacks to change the state of a server. The TCP SYN may be a single bit in a field of six control bits in a TCP header. The SYN bit may be utilized to synchronize sequence numbers in order to ensure that every octet in a given TCP packet may be received and acknowledged. A packet type may be a characteristic that may be present in a frame or a multitude of frames that are, for example, a login request for a protocol. For example, iSCSI or a frame or a group of frames carrying some credential or connection request information. The packet type may comprise a complete field or portions of any of the above fields or any combination of fields or sub fields or wild cards.

A connection identifier may be a collection of information trying to associate a frame or frames with a particular endpoint, connection, group of connections or a specific origin. A frame type may be a collection of information trying to identify a specific type of frames potentially across more than one connection.

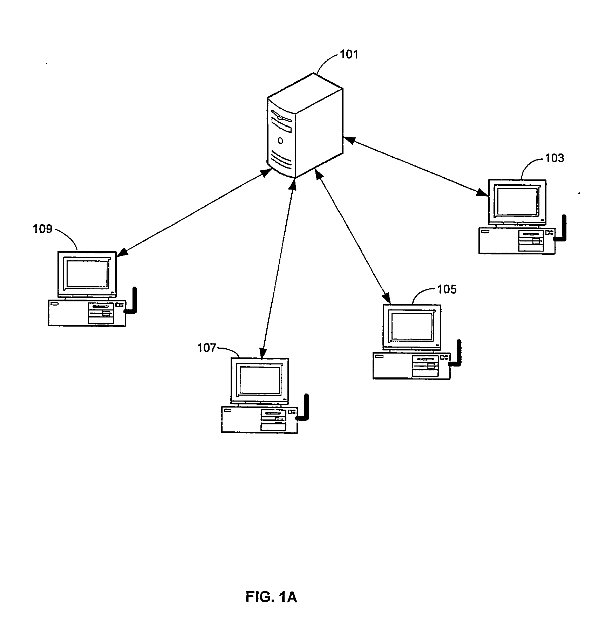

FIG. 1A is a block diagram of an exemplary client server architecture that may be utilized in accordance with an embodiment of the invention. Referring to FIG. 1A, there is shown a host 101 and a plurality of clients, client 103, client 105, client 107 and client 109. The plurality of clients, client 103, client 105, client 107 and client 109 may comprise suitable logic, circuitry and/or code that may be enabled to orchestrate a denial of service attack on the host 101. The host 101 may comprise suitable logic, circuitry and/or code that may be enabled to limit its new connection acceptance rate or the number of suspected frames of a known profile, for example, Internet control message protocol (ICMP) in order to make sure that attacks may not disrupt its service level to legitimate clients.

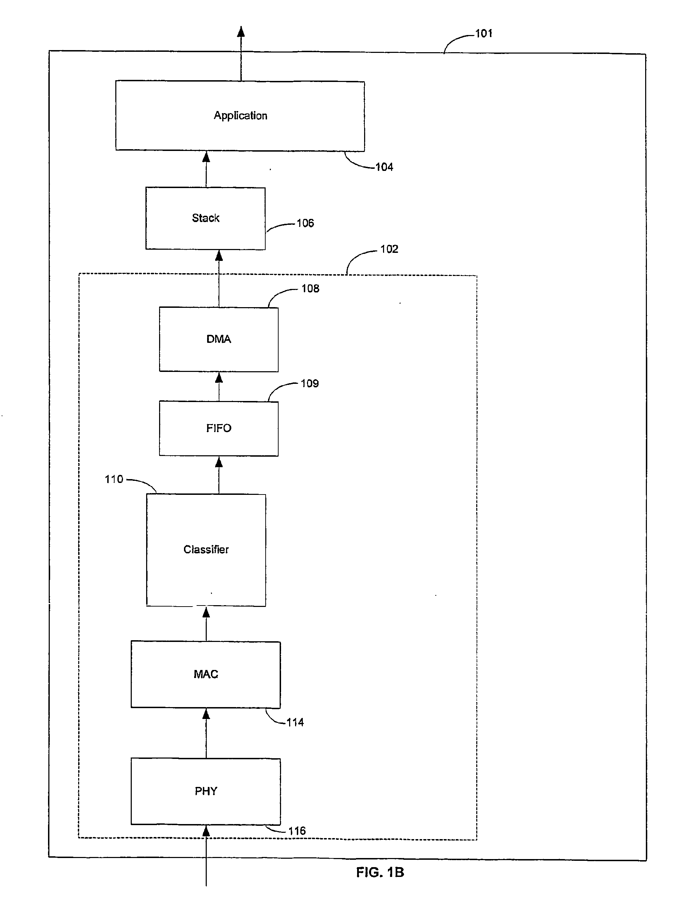

FIG. 1B is a block diagram of exemplary hardware with a network interface controller (NIC) providing L2 services for mitigating denial of service, in accordance with an embodiment of the invention. Referring to FIG. 1B, there is shown a host 101. The host 101 may comprise an application block 104, a networking stack 106 and a network interface controller (NIC) block 102. The NIC 102 may comprise a direct memory access (DMA) block 108, a first in first out (FIFO) buffer block 109, a classifier block 110, a medium access control (MAC) layer block 114 and a physical (PHY) layer block 116.

The network interface controller (NIC) 102 may comprise suitable logic, circuitry and/or code that may be utilized to connect a workstation to a local area network (LAN), for example. The NIC 102 may be enabled to transfer data from a host 101 or host resident application 104 or host resident communications stack 106, format it into a specific packet format required by the LAN protocol, for example, Ethernet or a higher layer protocol and transfer it to a shared medium via a cable, for example. The DMA block 108 may comprise suitable logic, circuitry and/or code that may be enabled to transfer data from a storage device or a LAN interface controller directly to random access memory (RAM), which speeds up processing of data. The FIFO buffer 109 may comprise suitable logic, circuitry and/or code that may be enabled to employ a buffering scheme to store network packets until they are placed in the host RAM by the DMA 108. The FIFO buffer 109 may be coupled to the DMA block 108, and the classifier block 110.

The classifier block 110 may comprise suitable logic, circuitry and/or code that may be enabled to determine the connection identifier and/or a packet type for each packet. The classifier block 110 may screen out requests from known or suspected illegitimate clients by dropping certain packets based on type and/or a connection identifier. The classifier block 110 may also limit the rate of certain requests based on packet type and/or connection identifier. In an embodiment of the invention, the classifier block 110 may also rate limit packets based solely on the packet type.

The MAC layer block 114 may comprise suitable logic, circuitry and/or code that may be enabled to control access to a medium that may be shared between two or more entities. The MAC layer block 114 may comprise a MAC address that is unique to each NIC. The MAC layer block 114 may be enabled to encode and decode data packets into bits. The MAC layer block 114 may be enabled to furnish transmission protocol knowledge and management and may handle errors in the physical layer, flow control and frame synchronization. The MAC layer block 114 may control how a computer on the network gains access to the data and permission to transmit it. The physical layer (PHY) block 116 may provide for transmission of information over a physical medium connecting two devices. The PHY layer block 116 may transmit a bit stream, for example, an electrical impulse, light or radio signal through the network at the electrical and mechanical level. The PHY layer block 116 provides the hardware for sending and receiving data on a carrier, for example, cables.

In accordance with an embodiment of the invention, a server may opt to limit its new connection acceptance rate or the number of suspected frames of a known profile, for example, internet control message protocol (ICMP) in order to make sure that attacks may not disrupt its service level to legitimate clients. In an exemplary embodiment of the invention, a server may ensure that up to 80% of the machine resources may be consumed by the application during peak time, while no more than 20% may be dedicated for networking including new connection requests. These percentages may be allocated differently as may be needed. The communication stack 106 may also run one or more heuristic algorithms, which may be adapted to screen the connection requests and deny known attacks or suspicious requests. This code may be adapted to reflect all known attacks.

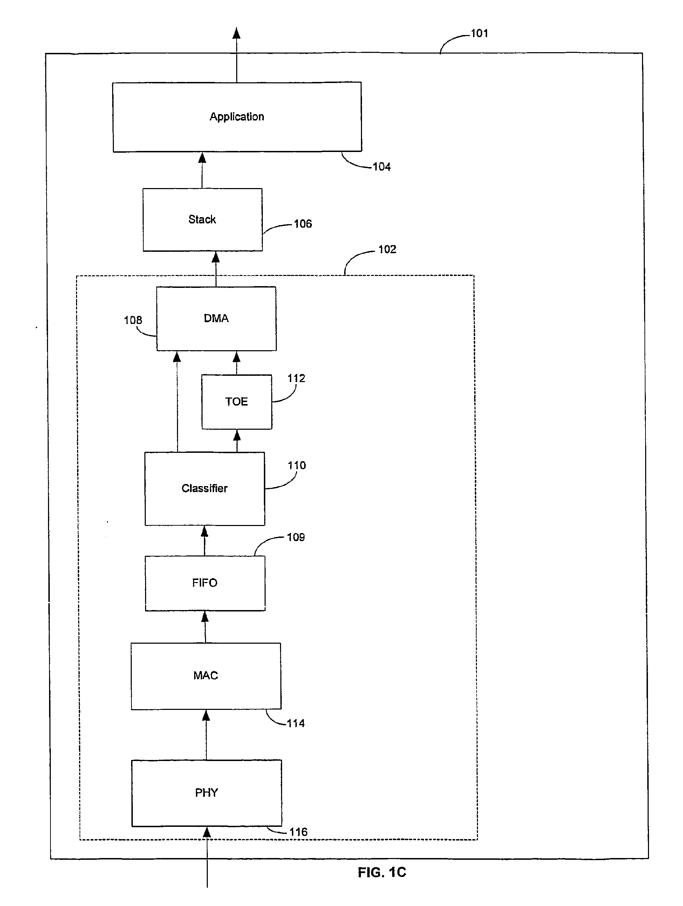

FIG. 1C is a block diagram of exemplary hardware with a NIC providing L2 and L4 services using a TCP offload engine (TOE), in accordance with an embodiment of the invention. Referring to FIG. 1C, there is shown a host 101. The host 101 may comprise an application block 104, a networking stack 106 and a network interface controller (NIC) block 102. The NIC 102 may comprise a direct memory access (DMA) block 108, a first in first out (FIFO) buffer block 109, a classifier block 110, a TCP offload engine (TOE) block 112, a medium access control (MAC) layer block 114 and a physical (PHY) layer block 116. The various blocks in FIG. 1C are substantially as described in FIG. 1B.

The TOE block 112 may comprise suitable logic, circuitry and/or code that may be adapted to offload the TCP/IP protocol stack to a dedicated controller in order to reduce TCP/IP processing overhead in servers equipped with Gigabit network interface controllers (NICs). The TOE block 112 may allow the NIC 102 to place data directly into and out of application memory without the need for copying data and may enable support for low latency communications, for example, clustering and storage communications. The TOE block 112 may be coupled to the DMA block 108 and the classifier block 110.

The packets that may be offloaded may be processed by the TOE block 112 while the packets that are not TCP or not for offloaded TCP connections are routed to the DMA block 108 for processing in the network stack 106. The classifier 110 may include parsing logic that is similar to that needed for TOE processing. The classifier 110 may require additional logic and circuitry or code not present in the TOE parsing logic. In an embodiment of the invention, the classifier block 110 may be merged into the TOE block 112, utilizing TOE parsing, processing, and/or storage components.

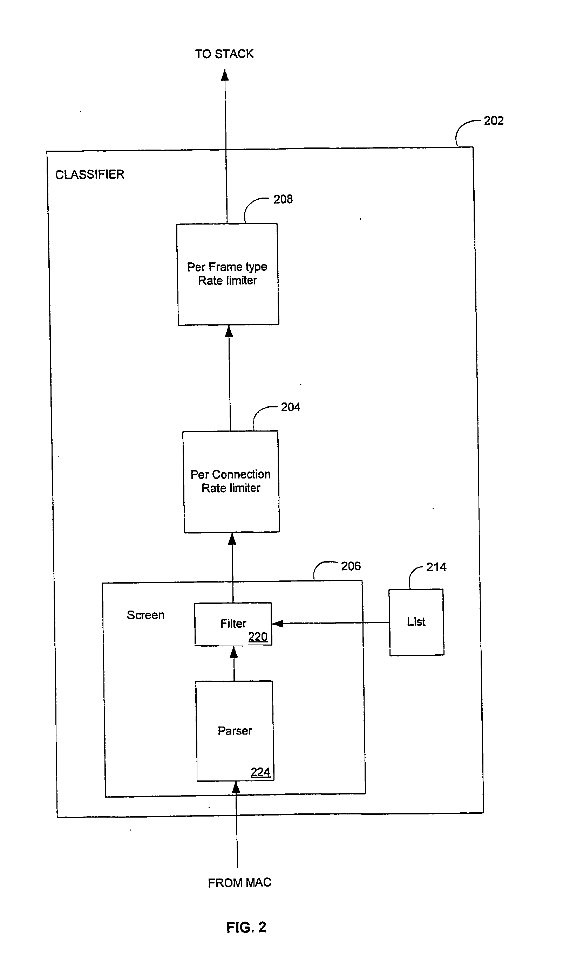

FIG. 2 is a block diagram illustrating a classifier block of the network interface controller of FIG. 1B, in accordance with an embodiment of the invention. Referring to FIG. 2, there is shown a classifier block 202. The classifier block 202 may comprise a per connection rate limiter block 204, a screen block 206, a per frame type rate limiter block 208, and a list block 214. The screen block 206 may comprise a filter 220 and a parser 224. At least one of the blocks described in FIG. 2 may be implemented in hardware, embedded firmware, or a combination of hardware, embedded firmware and logic on a device.

The parser 224 may be enabled to observe each packet received from the MAC 114 and determine the associated packet type of each packet. These packets may be processed by the filter block 220 if they are of a certain type, where processing has been requested against a potential attack, and may accordingly be processed by the filter block 220 for packet type related processing. These may include address resolution protocol (ARP) packets, TCP synchronous (SYN) packets or iSCSI login packets. If the packet type is not configured for processing by the filter block 220, then the packet may be subject to connection identifier processing before it is passed through. In another embodiment of the invention, the connection identifier may be processed before the connection type or both the connection identifier and the connection type of the packet may be processed in a single step and passed through. The packets chosen for filtering may be the packets that may create obligations on the stack for processing and memory resources.

The filter block 220 may determine a connection identification value based on the frame type for the frames to be processed by the filter block 220. The TCP SYN packets may have a connection identifier generated from the IP source address, and optionally the TCP source port. In an embodiment of the invention, the IP destination address and TCP destination port may also be a part of the connection identifier. The ARP packets may use only the IP address or the L2 source address as their connection identifiers. Once the identifier is determined, a list 214 may be searched. The list 214 may also be selected by the packet type. Each list 214 may be maintained by the stack 106, and in this embodiment, contains the illegitimate connection identifiers. The stack 106 may place the connection identifiers that it has deemed to be of some risk in the list 214. If the packet's identity is not found in the list 214, then the packet may be marked for processing in the per connection rate limiter block 204. If the packet's connection identifier is found in the list 214, then the packet may be dropped. In an embodiment of the invention, different packet types may have different lists, and each list may have similar or different formats for the connection identifier value.

The per frame type limiter block 208 may be enabled to provide packet rate limits for the packets that are of a type that are not dropped by the tilter block 220. Simple packet rate control may consume less NIC resources than packet filtering. This provides some protection for the system resources for packet types that are of less risk to the system. These packets types may include RMCP packets, RARP packets, iSCSI login and other packets that require extensive processing and/or memory resources in the stack. The per frame type limiter 208 may count the number of packets of the selected type that are received in a period of time, and if the number exceeds a programmed threshold, the excess packets may be dropped.

The per connection rate limiter block 204 may be enabled to limit the rate of packets that are of types that were processed in the filter block 220 or the packets that had connection identifiers not dropped by the filter block 220. The rate of packets not found in the list 214 may be limited. If the rate of packets that pass the screen block 206 exceeds the programmed rate, then the excess packets may be dropped. The combination of packet type protection and packet rate protection may allow the system to devise a protection against the particular attack identified. The attack may utilize specific connection identifiers, specific frame types or both specific connection identifiers and specific frame types. The packets that were of the types configured to be processed by the filter 220 and rate limit blocks 204 and 208, and the packets that were not of any of the types to be processed by the filter 220 may be passed to the stack 106 for processing.

In accordance with an embodiment of the invention, a learning process may be created in which the NIC 103 may be enabled to learn about the attacks/attackers and adapt accordingly. The NIC 103 may comprise a combination of screening and rate limiting, which may be implemented in hardware, based on the decoded packet type and corresponding connection identifier table match.

During initialization, screening and rate limiting of known attacks may be performed in the NIC hardware. Either the stack 106 or a device driver or a management application or an external source, for example, a management entity or an administrator may provide information regarding screening, frame types to rate limit, and a desired rate limiting level expressed, for example, in framer per second or bytes per second, or as a percentage of received packets. Exemplary frame types that may be rate limited may comprise TCP SYN, ICMP, and PING. In one exemplary embodiment or configuration of the invention, 300 frames per second (fps) of the suspected traffic may be allowed to pass for all identified frame types in order to achieve a maximum desired load that may be supported by the host 101 through the NIC 103.

In another exemplary embodiment of the invention, a specified rate of each type of frame may be allowed to pass in order to achieve a maximum desired load that may be supported by the host 101 through the NIC 103. For example, 200 fps of TCP SYN messages may be allowed to pass and 250 fps of ICMP messages may be allowed to pass. A maximum permissible load may be a function of network bandwidth and server resources, for example, CPU and/or memory resources. As a result of acquiring attack related information and learning from these attacks, either the stack 106 or a device driver or a management application or an external source, for example, a management entity or an administrator may enable population of the illegitimate clients list or the legitimate clients list or a combination with information identifying those clients.

In accordance with an embodiment of the invention, the stack 106 may be enabled to determine whether a suspected attack may be occurring based on a surge in rates for particular types of frames. When an attack is launched, some or all of the attacking frames may reach the classifier 202. Accordingly, the stack 106 may decrease the maximum rate setting in the rate limiter to block more incoming traffic in order to guarantee that there is sufficient bandwidth for analysis of a potential attack. Rate limiting may prevent suspected traffic from illegitimate clients or suspected frame types from reaching levels that may affect server performance, but may filter legitimate clients as well. As illegitimate clients are identified, the server may continuously update the illegitimate clients' list. The filter 220 may block the illegitimate clients, which may cause more of the legitimate clients to pass through the per connection rate limiter 204. This may allow the server to analyze more potential and actual attacks or maintain the required service level. If the rate of illegitimate clients detected by the stack 106 drops, the server may be adapted to relax rate limit restrictions, allowing better performance for the legitimate clients.

In an embodiment of the invention, when the stack 106 detects a first attack, it may reduce the rate on the per-connection rate limiter 204, and add the identity of the first illegitimate client to the list 214. As the list 214 is expanded with known illegitimate clients, the per-connection rate limiter 204 may be relaxed or raised by the stack 106 because the filter block 220 may be effective once it has knowledge of the illegitimate connection identifiers. The legitimate packets may no longer be affected by the attack. In an embodiment of the invention, the NIC 102 may process the rate limiting and searching at line rate utilizing the resources provided by the classifier block 110. This reduces the load on the host CPU by removing the rate limiting and searching tasks and by dropping the illegitimate frames in the NIC 102.

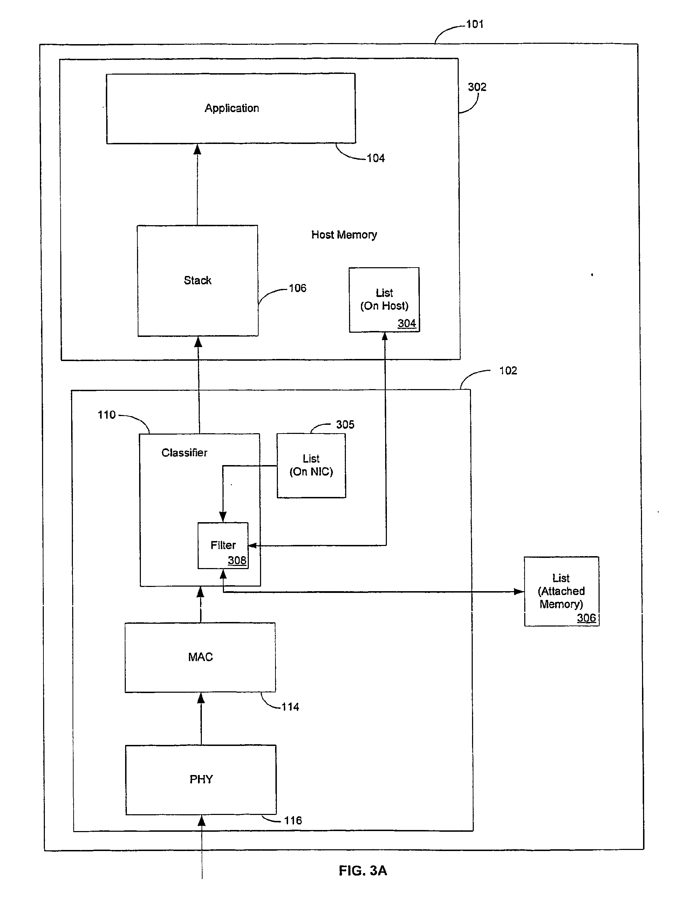

FIG. 3A is a block diagram of another embodiment of exemplary hardware for mitigating denial of service, in accordance with an embodiment of the invention. Referring to FIG. 3A, there is shown a host 101. The host 101 may comprise a host memory 302, a network interface controller (NIC) block 102, and an attached memory list block 306. The host memory 302 may comprise an application block 104, a stack 106 and a list block 304. The NIC 102 may comprise a classifier block 110, a list block 305, a medium access control (MAC) layer block 114 and a physical (PHY) layer block 116. The classifier block 110 may comprise a filter block 308. The various blocks in FIG. 3A are substantially as described in FIG. 1B and FIG. 2.

In an embodiment of the invention, the attached memory list block 306 may be outside the NIC 102 to mitigate the cost of the list storage in the classifier block 110. The attached memory list block 306 may be attached to the device directly, or it may be a portion of the host memory 302, and may be accessed using direct memory access (DMA). The attached memory list block 305 may be on the NIC 102. The list may reside inside the device or partially in the device and in the external memory or host memory or use caching schemes to allow for a smaller on-device memory, with a larger list maintained external to the device.

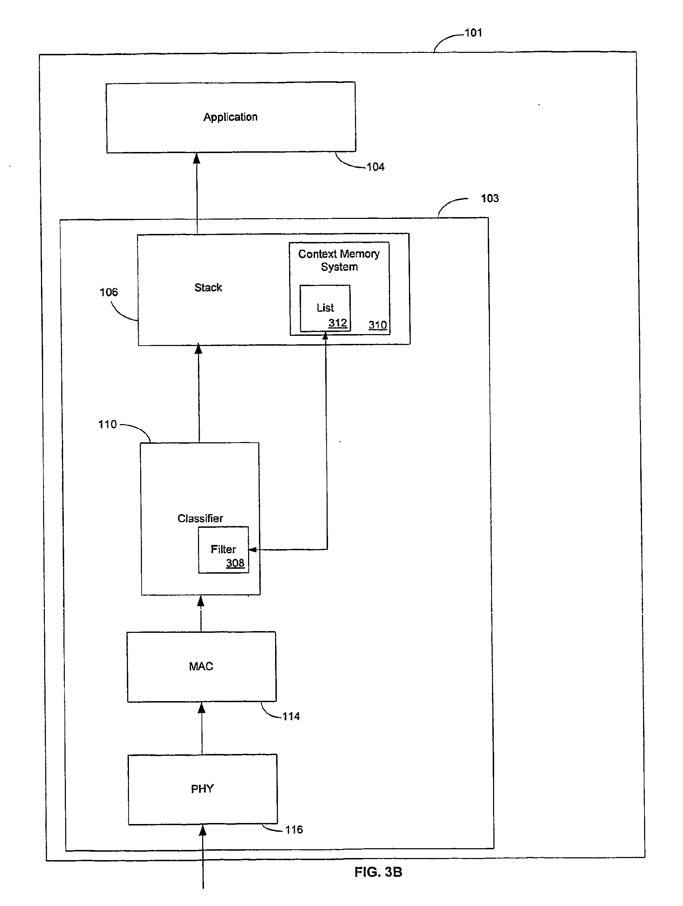

FIG. 3B is a block diagram of another embodiment of exemplary hardware for mitigating denial of service, in accordance with an embodiment of the invention. Referring to FIG. 3B, there is shown a host 101. The host 101 may comprise an application block 104 and a NIC 103. The NIC 103 may comprise a stack 106, a classifier block 110, a medium access control (MAC) layer block 114 and a physical (PHY) layer block 116. The classifier block 110 may comprise a filter block 308. The stack 106 may comprise a context memory block 310. The context memory block 310 may comprise a list block 312. The various blocks in FIG. 3B are substantially as described in FIG. 1B and FIG. 2.

The context memory block 310 may comprise suitable logic, circuitry and/or code that may be enabled to store context data and/or program related information about different connection identifiers. The context memory block 310 may be coupled to the classifier block 110. The context memory block 310 may be enabled to store a list of illegitimate clients, which may be utilized to deny service to any client device that may be on the list 312. In another embodiment of the invention, a content addressable memory (CAM) may be utilized to aid the search. In accordance with an embodiment of the invention, the NIC 102, which comprises dedicated hardware, may be enabled to execute the comparison or matching at wire speed. In an embodiment of the invention, the list block 312 may be within the context memory block 310 if the NIC 102 supports TCP offload technology to mitigate the cost of the memory in the classifier 110. The list or lists may be shared with other consumers or may be fully or partially integrated with other states maintained by the NIC 102 like the context memory 310.

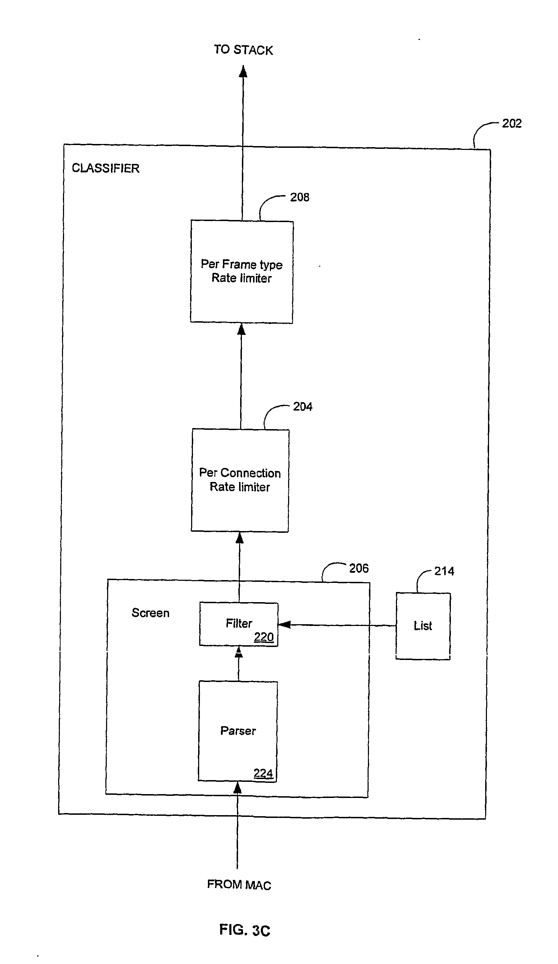

FIG. 3C is a block diagram illustrating storage of illegitimate clients in the classifier block of the network interface card of FIG. 2, in accordance with an embodiment of the invention. Referring to FIG. 2, there is shown a classifier block 202. The classifier block 202 may comprise a per connection rate limiter block 204, a screen block 206, a per frame type rate limiter block 208, and a list block 214. The screen block 206 may comprise a filter 220 and a parser 224. The various blocks in FIG. 3C are substantially as described in FIG. 1B and FIG. 2.

The list block 214 comprises a list of illegitimate clients. The received frames may be subject to screening by the screen block 206. If the packet identifier or connection identifier of the received frame is in the list block 214, the received frame may be dropped by the NIC 102. If the packet identifier or connection identifier of the received frame is not in the list block 214, the received frame along with the other frames comprising legitimate traffic and potentially some illegitimate traffic may be further processed through the rate limiters 204 and 208 before being sent to the stack.

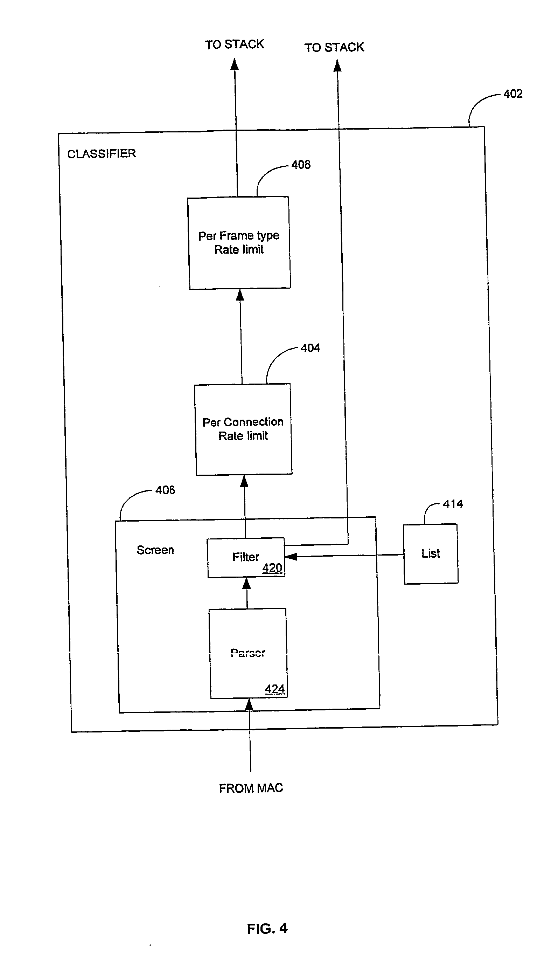

FIG. 4 is a block diagram illustrating storage of legitimate clients in the screening block of the network interface card of FIG. 2, in accordance with an embodiment of the invention. Referring to FIG. 4, there is shown a classifier block 402. The classifier block 402 may comprise a per connection rate limiter block 404, a screen block 406, a per frame type rate limiter block 408, and list block 414. The screen block 406 may comprise a filter 420 and a parser 422. The various blocks in FIG. 4 are substantially as described in FIG. 2.

The filter block 420 may be enabled to process frames selected by the parser 422 for list searching based on their packet type. The list 414 may be maintained by the stack 106, and in this embodiment, contains the legitimate connection identifiers. If the packet's identity is not found in the list 414, then the packet may be transmitted to the per connection rate limiter block 404. The per connection rate limiter block 404 may be enabled to rate limit the frames that were not found in the legitimate list 414. If the packet's identity is found in the list 414, then the packet may be transmitted to the stack 106 for further processing.

In an embodiment of the invention, the per-connection rate limiter 404 may allow a fixed rate setting. Initially the list 414 may be empty and all packets of that type may be passed through the per connection rate limiter 404. The stack 106 may process these packets and program them into the list 414 as it learns trusted connection identifiers. Once the connection identifiers are in the list, further frames with the same connection identifiers may be transferred directly to the stack 106. Initial activity from new connection identifiers may be rate limited until that connection identifier is trusted by the stack 106 and added to the list 414. In some applications, the legitimate list may be smaller than the illegitimate list, which may enable a faster search by the NIC 102.

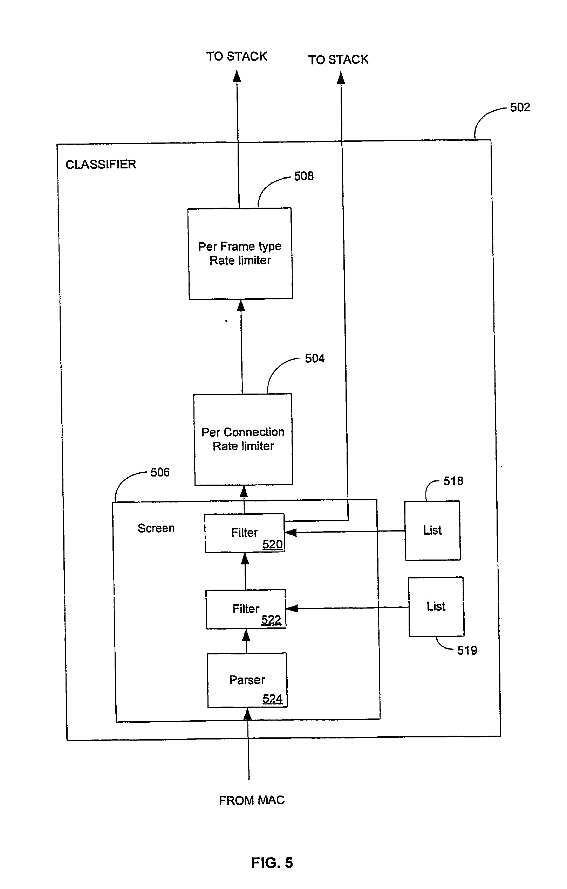

FIG. 5 is a block diagram of a classifier illustrating storage of a list of legitimate clients and a list of illegitimate clients, in accordance with an embodiment of the invention. Referring to FIG. 5, there is shown a classifier block 502, a legitimate clients list block 518 and an illegitimate clients list block 519. The classifier block 502 may comprise a per connection rate limiter block 504, a screen block 506 and a per frame type rate limiter block 508. The screen block 506 may comprise a plurality of filters 520 and 522, and a parser 524. The various blocks in FIG. 5 are substantially as described in FIG. 2.

If the connection identifier of a received frame does not match with a connection identifier of an illegitimate client list 519, the filter 522 may pass the frame to the filter 520 for further processing without rate limiting. If the connection identifier of a received frame matches with a connection identifier of an illegitimate client list 519, the frame may be dropped.

If the connection identifier of an incoming packet does not match with one of the clients in the legitimate clients list 518, the filter 520 may pass the packet frame to the per connection rate limiter 504 for further processing. Similarly, if the connection identifier of an incoming packet matches with one of the clients in the legitimate clients list 518, the packet frame may be passed to the stack 106 directly for further processing. The per frame type rate unit block 506 may be enabled to execute per frame type rate limit by identifying relevant frame types inside incoming frames. In an embodiment of the invention, if the list processing is applied to TCP SYN packets from outside connections, the packet type may include the source IP address bits that do not match the source IP address bits provided that define inside connections. For example, if the site is subnet 123.124.125.x, then all packets that have upper 24 bits other than 123.124.125 may be classified as outside packets.

In another embodiment of the invention, the received frame may be first processed by the filter 520 associated with the legitimate clients list 518. If the connection identifier of an incoming packet does not match with one of the clients in the legitimate clients list 518, the filter 520 may pass the packet frame to the filter 522 associated with the illegitimate clients list 519 for further processing. If the connection identifier of an incoming packet does not match with one of the clients in the illegitimate clients list 519, the filter 522 may pass the packet frame to the per connection rate limiter 504 for further processing.

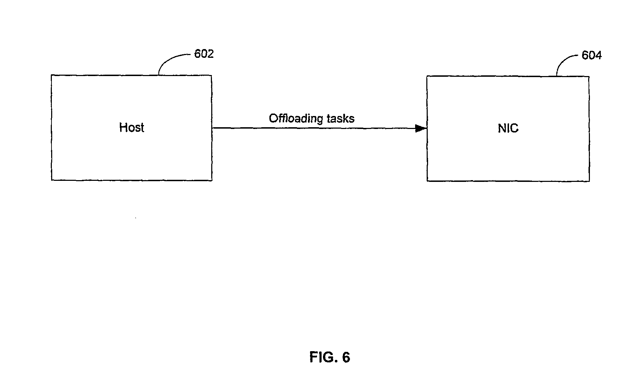

FIG. 6 is an exemplary block diagram illustrating offloading tasks from a host to a NIC, in accordance with an embodiment of the invention. Referring to FIG. 6, there is shown a host 602 and a NIC 604. The host 602 may comprise suitable logic, circuitry and/or code that may be enabled to offload at least one of the screening mechanism and the rate limiting mechanism to the network interface controller (NIC) 604 based on available filter resources, for example, filter 520 (FIG. 5) at the NIC 502. The host 602 may comprise suitable logic, circuitry and/or code that may be enabled to offload at least one of the screening mechanism and the rate limiting mechanism to a network interface controller (NIC) 604 based on a function of a filter, for example, filter 520 at the NIC 502. The host 602 may comprise suitable logic, circuitry and/or code that may be enabled to offload at least one of the screening mechanism and the rate limiting mechanism to a network interface controller (NIC) 604 based on a type of function of the received incoming packet.

In an embodiment of the invention, screening and rate limiting may be performed at the NIC 604 and the host 602. The NIC 604 and the host 602 may perform host screening and rate limiting based on the available filter resources. For example, filters may be utilized on the NIC 604. When the NIC 604 filters are full, the host 602 filters may be utilized for any over-flow. The NIC 604 and the host 602 may perform host screening and rate limiting based on the function of the filters. For example, the filters on the NIC 604 may be utilized to remove illegitimate clients from within the organization. Filters on the host 602 may be utilized to remove illegitimate clients from outside the organization. The NIC 604 and the host 602 may perform host screening and rate limiting based on the packet type or characteristic. For example, the NIC 604 filters may be utilized for SYN and ping attacks. The host 602 filters may be utilized for ICMP attacks.

The NIC 604 and the host 602 may perform host screening and rate limiting based on the filter control location. For example, the NIC 604 may determine rate limiting settings and screening of the illegitimate clients list. The host 602 may determine rate limiting settings and screening of the legitimate clients list. The NIC 604 and the host 602 may perform host screening and rate limiting based on filter type. For example, the NIC 604 may perform rate limiting while the host 602 may control the illegitimate clients list. In an embodiment of the invention, the host 602 may be enabled to control rate limiting and may add clients to the illegitimate clients list. After a period of time, the NIC 604 may remove certain clients from the illegitimate clients list. In an embodiment of the invention, management, administration and any combination thereof may also control the screening and rate limiting mechanisms.

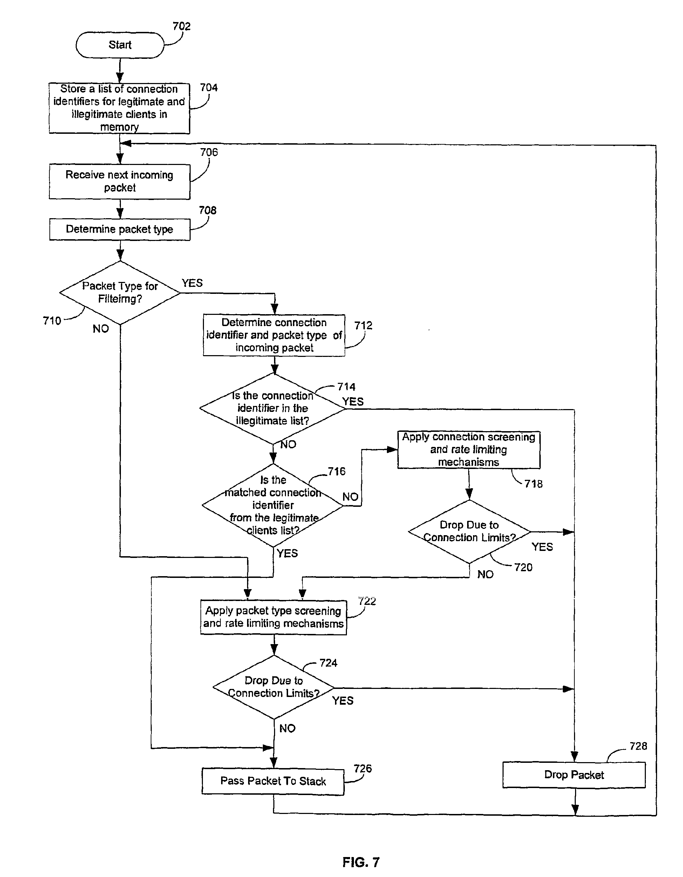

FIG. 7 is a flowchart illustrating mitigating denial of service in a communication system, in accordance with an embodiment of the invention. Referring to FIG. 7, exemplary steps may start at step 702. In step 704, a list of legitimate and illegitimate clients may be stored in the memory. In step 706, the NIC may receive the next incoming packet. In step 708, the connection identifier of the incoming packet may be determined. In step 710, it may be determined whether the type of packet received may be transmitted to a filter. These may include address resolution protocol (ARP) packets, and TCP synchronous (SYN) packets, for example. These packets may create obligations on the stack for processing and memory resources. If the received packet type is not transmitted to the filter, control passes to step 722. If the received packet type is transmitted to the filter, control passes to step 712. In step 712, the connection identifier and the packet type of the incoming packet may be determined. In step 714, it may be determined whether the connection identifier is in the illegitimate clients list. If the connection identifier is in the illegitimate clients list, control passes to step 728, where the packet may be dropped. Control then returns to step 706 for processing.

If the connection identifier is not in the illegitimate clients list, control passes to step 716. In step 716, it may be determined whether the connection identifier is in the legitimate clients list. If the connection identifier is not in the legitimate clients list, control passes to step 718. In step 718, connection screening and rate limiting mechanisms may be applied to the received packet. In step 720, it may be determined whether the packet needs to be dropped due to connection limits. If the packet needs to be dropped due to connection limits, control passes to step 728, where the packet may be dropped. If the packet does not need to be dropped due to connection limits, control passes to step 722. If the connection identifier is in the legitimate clients list, control passes to step 726, where the packet may be passed to the stack for further processing. In step 722, connection screening and rate limiting mechanisms may be applied to the received packet.

In step 724, it may be determined whether the packet needs to be dropped due to connection limits. If the packet needs to be dropped due to connection limits, control passes to step 728, where the packet may be dropped. If the packet does not need to be dropped due to connection limits, control passes to step 726, where the packet may be passed to the stack for further processing. Control then returns to step 706.

In accordance with an embodiment of the invention, a system for mitigating denial of service may comprise a network interface controller (NIC), for example, NIC 102 (FIG. 1 B) that determines whether at least a first connection identifier of a received incoming packet matches with at least a second connection identifier stored in memory. The NIC 102 may be enabled to combine a screening mechanism, for example, screening block 206 (FIG. 2) and a rate limiting mechanism, for example, the per frame type rate limiter block 208 and per connection rate limiter block 204. The NIC 102 enables determination of a packet type of the received incoming packet. The NIC 102 enables filtering of the received incoming packet based on the determined packet type by the filter 220. The NIC 102 enables storage of a list of at least one of legitimate clients 518 and illegitimate clients 519 in the memory.

The NIC 102 enables determining whether the first connection identifier of the received incoming packet matches with the second connection identifier stored in the list of illegitimate clients 519. The NIC 102 enables dropping of the received incoming packet if the first connection identifier of the received incoming packet matches with the second connection identifier stored in the list of illegitimate clients 519. The NIC 102 enables determining whether the first connection identifier of the received incoming packet matches with the second connection identifier stored in the list of legitimate clients 518.

The NIC 102 enables utilizing the screening mechanism and the rate limiting mechanism to regulate the received incoming packet based on determining whether the first connection identifier of the received incoming packet matches with the second connection identifier stored in the list of legitimate clients 518. The NIC 102 enables updating of the stored list of at least one of the legitimate clients 518 and the illegitimate clients 519 in the memory. The NIC 102 enables adjusting of at least one of the screening mechanism and said rate limiting mechanism to regulate the received incoming packet based on at least one host offload policy. The NIC 102 enables offloading of at least one of the screening mechanism and the rate limiting mechanism from a host 101 to the NIC 102 based on available filter resources at the NIC 102. The NIC 102 enables determining whether a number of the received incoming packets exceed a threshold in a time period. The NIC 102 enables dropping the received incoming packet if the determined number of the received incoming packets exceeds the threshold in the time period.

An external memory device 306 may store the second connection identifier. An internal context random access memory (RAM) 310 may store the second connection identifier. A host memory 302 may store the second connection identifier. The NIC 102 may store the second connection identifier. A list of illegitimate clients may be created based on known attacks or new attacks and the stack 106 may load this list of illegitimate clients to the classifier 110 in the NIC 102, as described in FIG. 3. A list of legitimate clients may be created based on known attacks or new attacks and the stack 106 may load this list of legitimate clients to the classifier 110 in the NIC 102, as described in FIG. 4. A combination of a legitimate clients list 518 and an illegitimate clients list 519 may be created based on known attacks or new attacks and the stack 106 may load these lists of legitimate clients and illegitimate clients to the classifier 110 in the NIC 102, as described in FIG. 5. In another embodiment of the invention, the NIC 102 may comprise hardware, logic, processing or a combination that may allow itself to learn about potential attacks. In this case, the NIC 102 may manage its list, screening and rate limiting process. In another embodiment of the invention, a combination of the NIC 102 resources, an external entity, for example, a stack 106, and an administrator and/or management entity may be enabled to manage the lists, the screening and rate limiting processes on the NIC 102. A policy may be downloaded to the NIC 102 to direct the NIC's 102 activities accordingly.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for processing packets, the method comprising:
utilizing a screening mechanism, comprising:
determining a packet type of a received incoming packet,
determining at least a first connection identifier of said received incoming packet based upon said determined packet type, and
determining whether said at least a first connection identifier matches at least a second connection identifier stored in a list of at least one of legitimate clients and illegitimate clients in a memory; and
utilizing a rate limiting mechanism, comprising:
receiving screened packets from said screening mechanism based upon whether said at least first connection identifier matches said at least second connection identifier, and
limiting a rate of transmission of said received screened packets below a preprogrammed threshold.

2. The method according to claim 1, further comprising determining whether said at least first connection identifier of said received incoming packet matches with said at least second connection identifier stored in said list of illegitimate clients.

3. The method according to claim 2, further comprising dropping said received incoming packet if said at least first connection identifier of said received incoming packet matches with said at least second connection identifier stored in said list of illegitimate clients.

4. The method according to claim 1, further comprising determining whether said at least first connection identifier of said received incoming packet matches with said at least second connection identifier stored in said list of legitimate clients.

5. The method according to claim 4, wherein if said at least first connection identifier of said received incoming packet matches with said at least second connection identifier stored in said list of legitimate clients, said screened packets are not received by said rate limiting mechanism.

6. A system for processing packets, the system comprising:
a network interface controller, NIC, (202, 402, 502) comprising:
a screening mechanism (206, 406, 506) adapted to:
determine a packet type of a received incoming packet,
determine at least a first connection identifier of said received incoming packet based upon said determined packet type, and
determine whether said at least a first connection identifier matches at least a second connection identifier stored in a list of at least one of legitimate clients and illegitimate clients in a memory; and
a rate limiting mechanism (204, 208, 404, 408, 504, 508) adapted to:
receive screened packets from said screening mechanism based upon whether said at least first connection identifier matches said at least second connection identifier, and
limit a rate of transmission of said received screened packets below a preprogrammed threshold.

7. The system according to claim 6, wherein the screening mechanism is further adapted to determine whether said at least first connection identifier of said received incoming packet matches with said at least second connection identifier stored in said list of illegitimate clients.

8. The system according to claim 7, wherein the screening mechanism is further adapted to drop said received incoming packet if said at least first connection identifier of said received incoming packet matches with said at least second connection identifier stored in said list of illegitimate clients.

9. The system according to claim 6, wherein the screening mechanism is further adapted to determine whether said at least first connection identifier of said received incoming packet matches with said at least second connection identifier stored in said list of legitimate clients.

10. The system according to claim 9, wherein if said at least first connection identifier of said received incoming packet matches with said at least second connection identifier stored in said list of legitimate clients, said screened packets are not received by said rate limiting mechanism.

## Patentansprüche

1. Verfahren zum Verarbeiten von Paketen, wobei das Verfahren umfasst:
Verwenden eines Auswahlmechanismus, mit:
Ermitteln des Pakettyps eines empfangenen ankommenden Pakets;
Ermitteln wenigstens eines ersten Verbindungsidentifizierers des empfangenen ankommenden Pakets basierend auf dem ermittelten Pakettyp; und
Ermitteln, ob der wenigstens erste Verbindungsidentifizierer mit wenigstens einem zweiten Verbindungsidentifizierer übereinstimmt, der in einer Liste wenigstens eines von berechtigten Clients und unberechtigten Clients in einem Speicher gespeichert ist; und
Verwenden eines Ratenbegrenzungsmechanismus, mit:
Empfangen ausgewählter Pakete von dem Auswahlmechanismus basierend darauf, ob der wenigstens eine erste Verbindungsidentifizierer mit dem wenigstens zweiten Verbindungsidentifizierer übereinstimmt; und
Begrenzen der Senderate der empfangenen ausgewählten Pakete unter einen vorprogrammierten Schwellenwert.

2. Verfahren nach Anspruch 1, das des Weiteren das Ermitteln umfasst, ob der wenigstens erste Verbindungsidentifizierer des empfangenen ankommenden Pakets mit dem wenigstens zweiten Verbindungsidentifizierer übereinstimmt, der in der Liste unberechtigter Clients gespeichert ist.

3. Verfahren nach Anspruch 2, das des Weiteren das Fallenlassen des empfangenen ankommenden Pakets umfasst, wenn der wenigstens erste Verbindungsidentifizierer des empfangenen ankommenden Pakets mit dem wenigstens zweiten Verbindungsidentifizierer übereinstimmt, der in der Liste unberechtigter Clients gespeichert ist.

4. Verfahren nach Anspruch 1, das des Weiteren das Ermitteln umfasst, ob der wenigstens erste Verbindungsidentifizierer des empfangenen ankommenden Pakets mit dem wenigstens zweiten Verbindungsidentifizierer übereinstimmt, der in der Liste berechtigter Clients gespeichert ist.

5. Verfahren nach Anspruch 4, wobei, wenn der wenigstens erste Verbindungsidentifizierer des empfangenen ankommenden Pakets mit dem wenigstens zweiten Verbindungsidentifizierer übereinstimmt, der in der Liste berechtigter Clients gespeichert ist, die ausgewählten Pakete nicht von dem Ratenbegrenzungsmechanismus empfangen werden.

6. System zum Verarbeiten von Paketen, wobei das System aufweist:
einen Netzwerk-Schnittstellen-Controller (202, 402, 502) mit:
einem Auswählmechanismus (206, 406, 506), der ausgelegt ist zum:
Ermitteln des Pakettyps eines empfangenen ankommenden Pakets;
Ermitteln wenigstens eines ersten Verbindungsidentifizierers des empfangenen ankommenden Pakets basierend auf dem ermittelten Pakettyp; und
Ermitteln, ob der wenigstens eine erste Verbindungsidentifizierer mit wenigstens einem zweiten Verbindungsidentifizierer übereinstimmt, der in einer Liste wenigstens eines von berechtigten Clients und unberechtigten Clients in einem Speicher gespeichert ist; und
einem Ratenbegrenzungsmechanismus (204, 208, 404, 408, 504, 508), der ausgelegt ist zum:
Empfangen ausgewählter Pakete von dem Auswahlmechanismus basierend darauf, ob der wenigstens erste Verbindungsidentifizierer mit dem wenigstens zweiten Verbindungsidentifizierer übereinstimmt; und
Begrenzen der Senderate der empfangenen ausgewählten Pakete unter einen vorprogrammierten Schwellenwert.

7. System nach Anspruch 6, wobei der Auswahlmechanismus des Weiteren ausgelegt ist zum Ermitteln, ob der wenigstens erste Verbindungsidentifizierer des empfangenen ankommenden Pakets mit dem wenigstens zweiten Verbindungsidentifizierer übereinstimmt, der in der Liste unberechtigter Clients gespeichert ist.

8. System nach Anspruch 7, wobei der Auswahlmechanismus des Weiteren ausgelegt ist zum Fallenlassen des empfangenen ankommenden Pakets, wenn der wenigstens erste Verbindungsidentifizierer des empfangenen ankommenden Pakets mit dem wenigstens zweiten Verbindungsidentifizierer übereinstimmt, der in der Liste unberechtigter Clients gespeichert ist.

9. System nach Anspruch 6, wobei der Auswahlmechanismus des Weiteren ausgelegt ist zum Ermitteln, ob der wenigstens erste Verbindungsidentifizierer des empfangenen ankommenden Pakets mit dem wenigstens zweiten Verbindungsidentifizierer übereinstimmt, der in der Liste berechtigter Clients gespeichert ist.

10. System nach Anspruch 9, wobei, wenn der wenigstens erste Verbindungsidentifizierer des empfangenen ankommenden Pakets mit dem wenigstens zweiten Verbindungsidentifizierer übereinstimmt, der in der Liste berechtigter Clients gespeichert ist, die ausgewählten Pakete nicht von dem Ratenbegrenzungsmechanismus empfangen werden.

## Revendications

1. Procédé de traitement de paquets, le procédé comprenant :
l'utilisation d'un mécanisme de criblage, comprenant :
la détermination d'un type de paquet d'un paquet entrant reçu,
la détermination d'au moins un premier identifiant de connexion dudit paquet entrant reçu sur la base dudit type de paquet déterminé, et
la détermination si ledit au moins un premier identifiant de connexion correspond à au moins un deuxième identifiant de connexion stocké dans une liste d'au moins un de clients légitimes et de clients illégitimes dans une mémoire ; et
l'utilisation d'un mécanisme de limitation de débit, comprenant :
la réception de paquets criblés dudit mécanisme de criblage sur la base que ledit au moins un premier identifiant de connexion correspond ou non audit au moins un deuxième identifiant de connexion, et
la limitation d'un débit de transmission desdits paquets criblés reçus en-dessous d'un seuil préprogrammé.

2. Procédé selon la revendication 1, comprenant en outre la détermination si ledit au moins un premier identifiant de connexion dudit paquet entrant reçu correspond audit au moins un deuxième identifiant de connexion stocké dans ladite liste de clients illégitimes.

3. Procédé selon la revendication 2, comprenant en outre le rejet dudit paquet entrant reçu si ledit au moins un premier identifiant de connexion dudit paquet entrant reçu correspond audit au moins un deuxième identifiant de connexion stocké dans ladite liste de clients illégitimes.

4. Procédé selon la revendication 1, comprenant en outre la détermination si ledit au moins un premier identifiant de connexion dudit paquet entrant reçu correspond audit au moins un deuxième identifiant de connexion stocké dans ladite liste de clients légitimes.

5. Procédé selon la revendication 4, dans lequel, si ledit au moins un premier identifiant de connexion dudit paquet entrant reçu correspond audit au moins un deuxième identifiant de connexion stocké dans ladite liste de clients légitimes, lesdits paquets criblés ne sont pas reçus par ledit mécanisme de limitation de débit.

6. Système de traitement de paquets, le système comprenant :
un contrôleur d'interface réseau, NIC, (202, 402, 502) comprenant :
un mécanisme de criblage (206, 406, 506) adapté à :
déterminer un type de paquet d'un paquet entrant reçu,
déterminer au moins un premier identifiant de connexion dudit paquet entrant reçu sur la base dudit type de paquet déterminé, et
déterminer si ledit au moins un premier identifiant de connexion correspond à au moins un deuxième identifiant de connexion stocké dans une liste d'au moins un de clients légitimes et de clients illégitimes dans une mémoire ; et
un mécanisme de limitation de débit (204, 208, 404, 408, 504, 508) adapté à :
recevoir des paquets criblés dudit mécanisme de criblage sur la base que ledit au moins un premier identifiant de connexion correspond ou non audit au moins un deuxième identifiant de connexion, et
limiter un débit de transmission desdits paquets criblés reçus en-dessous d'un seuil préprogrammé.

7. Système selon la revendication 6, dans lequel le mécanisme de criblage est en outre adapté à déterminer si ledit au moins un premier identifiant de connexion dudit paquet entrant reçu correspond audit au moins un deuxième identifiant de connexion stocké dans ladite liste de clients illégitimes.

8. Système selon la revendication 7, dans lequel le mécanisme de criblage est en outre adapté à rejeter ledit paquet entrant reçu si ledit au moins un premier identifiant de connexion dudit paquet entrant reçu correspond audit au moins un deuxième identifiant de connexion stocké dans ladite liste de clients illégitimes.

9. Système selon la revendication 6, dans lequel le mécanisme de criblage est en outre adapté à déterminer si ledit au moins un premier identifiant de connexion dudit paquet entrant reçu correspond audit au moins un deuxième identifiant de connexion stocké dans ladite liste de clients légitimes.

10. Système selon la revendication 9, dans lequel, si ledit au moins un premier identifiant de connexion dudit paquet entrant reçu correspond audit au moins un deuxième identifiant de connexion stocké dans ladite liste de clients légitimes, lesdits paquets criblés ne sont pas reçus par ledit mécanisme de limitation de débit.
